# FASCICULE DE BREVET EUROPEEN

(11) **EP 0 722 307 B1**
(45) Date de publication et mention de la délivrance du brevet: **16.04.1997**
(21) Numéro de dépôt: 94929586.9
(22) Date de dépôt: 06.10.1994
(51) Int. Cl.: A61H 9/00, F16K 31/06

(54) **ELECTROVANNE ET APPAREIL DE MASSAGE METTANT EN OEUVRE UNE TELLE ELECTROVANNE**
ELETROMAGNETISCHES VENTIL SOWIE MASSAGEEINRICHTUNG MIT DIESEM VENTIL
ELECTROMAGNETIC VALVE AND MASSAGE DEVICE COMPRISING SAME

(30) Priorité: 07.10.1993 FR 9312151
(43) Date de publication de la demande: 24.07.1996
(73) Titulaire: LPG SYSTEMS, F-26000 Valence (FR)
(72) Inventeur: DURAND, Jacques, F-26500 Bourg-les-Valence (FR)
(74) Mandataire: Vuillermoz, Bruno
(86) Numéro de dépôt international: FR9401167
(87) Numéro de publication internationale: WO9509596

(56) Documents cités:
- EP-A- 0 224 422
- EP-A- 0 318 789
- DE-A- 3 133 060
- GB-A- 2 124 342
- US-A- 3 758 071
- US-A- 4 895 183

## Description

La présente invention concerne un nouveau type d'électrovanne pouvant être utilisée pour mettre en communication deux circuits maintenus à des pressions différentes afin d'assurer l'écoulement d'un fluide (liquide ou gazeux) depuis une zone à haute pression vers une zone à basse pression.

Elle a trait plus particulièrement à un nouveau type d'électrovanne dont la conception est telle qu'elle permette d'obtenir indifféremment :
- un fonctionnement en tout ou rien (circulation du fluide à un débit maximal lorsqu'elle est ouverte / arrêt de circulation lorsqu'elle est fermée),
- un débit constant réglable entre les deux extrêmes précités et,
- un fonctionnement dynamique entraînant un débit variable contrôlé du flux d'air entre deux valeurs prédéterminées avec possibilité de réglage entre lesdites valeurs.

Dans la suite de la description, l'invention sera décrite pour une électrovanne interposée sur la longueur d'un circuit dont une extrémité débouche à l'air libre, la haute pression à l'entrée dudit circuit étant alors équivalente à la pression atmosphérique et dont la sortie est reliée, quant à elle, à un système d'aspiration (pompe à vide) correspondant donc au circuit basse pression de l'ensemble.

Il est évident que cela n'est pas limitatif et qu'un tel type de vanne pourrait être interposé sur tout type de circuit comportant une entrée à haute pression et ce quelle que soit sa valeur et une sortie à pression inférieure.

Les électrovannes conventionnelles du type comportant essentiellement un piston soumis à l'action de moyens de rappel (ressorts) et dont les déplacements, commandés éventuellement de manière pneumatique et qui permettent d'interrompre ou d'assurer le passage d'un flux de fluide entre un circuit d'admission et un circuit d'évacuation à pression inférieure, ne sont pas adaptées pour résoudre un tel problème. En effet, ces électrovannes nécessitent en général des noyaux lourds entraînant une inertie importante. Elles sont par ailleurs difficilement utilisables sur des circuits à basse pression et pour lesquels on souhaite également obtenir un débit important, en ayant un temps de réponse très court, de l'ordre de quelques millisecondes. De plus, elles sont conçues pour assurer un débit prédéterminé, ce qui implique, lorsque l'on souhaite régler ce débit, d'utiliser une pluralité d'électrovannes pouvant être commandées indépendamment les unes des autres.

Par ailleurs, il existe également des électrovannes à débit réglable, mais elles ne sont pas adaptées lorsque l'on souhaite obtenir des débits importants et avoir des temps de réponse très courts, permettant de faire varier rapidement, selon une fréquence qui peut être variable, le débit d'un fluide entre deux zones soumises à des pression différentes.

Pour assurer l'ouverture et la fermeture d'une électrovanne, il a été proposé depuis fort longtemps, comme cela ressort des brevets US-A-3 758 071, GB-A-2 124 342 et DE-A-3 133 060, d'utiliser un ensemble obturateur, déplaçable à l'intérieur d'une chambre reliant deux circuits maintenus à des pressions différentes, apte sous l'action d'une force électromagnétique, à venir obturer l'entrée (ou la sortie) de l'un des circuits lorsque l'on souhaite couper le débit et qui, en l'absence de force électromagnétique, est rappelé en direction de la sortie (ou entrée) du second circuit, sans cependant l'obturer, afin que dans cette position, on obtienne un écoulement continu du fluide.

Aucune solution décrite dans ces documents ne permet cependant d'envisager de réaliser une électrovanne possédant les possibilités de fonctionnement telles que rappelées dans le préambule et qui implique donc non seulement de pouvoir obtenir des débits de fluide réglables, importants, mais également de pouvoir avoir un fonctionnement dynamique nécessitant un temps de réponse très court, de l'ordre de quelques millisecondes, permettant d'obtenir un débit variable contrôlé du flux d'air entre deux valeurs prédéterminées avec possibilité de réglage entre lesdites valeurs.

Or on a trouvé, et c'est ce qui fait l'objet de la présente invention, un nouveau type d'électrovanne, de conception particulièrement simple, qui permet de résoudre l'ensemble de ces problèmes.

D'une manière générale, l'invention concerne donc une électrovanne à débit variable, sans ressort de rappel, qui pemet de mettre en communication deux circuits maintenus à des pressions différentes afin d'assurer le débit d'un fluide depuis une zone à haute pression vers une zone à basse pression, comprenant, comme cela ressort de l'US-A-4 895 183:
- un boitier, avantageusement de forme cylindrique, qui constitue une chambre à l'intérieur de laquelle débouche un conduit dit "conduit d'admission" relié à la zone haute pression, et un conduit dit "conduit de sortie" relié à la zone basse pression ;
- un ensemble obturateur constitué par un clapet déplaçable librement à l'intérieur de la chambre, clapet en forme de disque plat, léger, non déformable, apte à être ramené automatiquement dans sa position permettant l'écoulement du fluide lorsque la pression à l'intérieur du conduit d'admission tend vers une valeur proche d'une pression de consigne prédéterminée, et qui :
   . sous l'action d'une force électromagnétique, tend à venir obturer l'orifice du conduit d'admission,
   . en l'absence de force électromagnétique, est rappelé en direction du conduit de sortie (BP), et n'obture pas l'entrée de ce dernier afin que dans cette position, on obtienne un écoulement continu du fluide avec un débit maximal maintenu à un niveau prédéterminé fonction de la différence de pression entre la zone haute pression et la zone basse pression et de l'éventuelle perte de charge.

L'électrovanne conforme à l'invention se caractérise en ce que :
- l'écoulement du fluide au travers dudit clapet est obtenu par l'intermédiaire d'orifices réalisés dans l'épaisseur de ce dernier, orifices disposés dans une zone médiane à l'extérieur de la périphérie du conduit d'admission afin que ce dernier puisse être obturé lorsque le clapet est rappelé sous l'action de la force électromagnétique ;
- elle comporte des moyens de réglage de la force électromagnétique de rappel exercée par l'électroaimant permettant d'une part, de positionner ledit clapet à un niveau prédéterminé entre l'ouverture et la fermeture pour obtenir un débit constant prédéterminé et, d'autre part, de le déplacer alternativement, selon une fréquence prédéterminée, permettant ainsi d'obtenir un débit alternatif de même fréquence et d'amplitude réglable, entraînant un fonctionnement séquentiel, pulsé, rythmique.

Selon une forme préférentielle de réalisation conforme à l'invention, la section totale des orifices réalisés dans l'épaisseur du clapet est sensiblement égale à la section des conduits d'admission et de sortie, lesdits conduits étant disposés coaxialement de part et d'autre de la chambre à l'intérieur de laquelle peut se déplacer le clapet.

Par ailleurs, la surface fictive, définie par le prolongement du conduit haute pression et qui se termine contre le clapet lorsque ce dernier n'est pas soumis à l'action de la force électromagnétique, qui est traversée par la totalité du flux d'air, a une aire sensiblement égale à la section des conduits d'admission et de sortie.

En outre, le clapet est avantageusement à base d'un matériau non aimantable (fer doux par exemple) et sa surface active est de préférence recouverte d'un revêtement de matière présentant une perméabilité magnétique faible créant un entrefer lorsque le clapet est en position fermée.

Enfin, l'électrovanne comporte de préférence un filtre intégré à l'intérieur du boitier et qui est traversé par le fluide avant son entrée dans le conduit d'admission.

Grâce aux caractéristiques bien précises tant du circuit de fluide à l'intérieur de l'électrovanne que du circuit magnétique, il est possible d'obtenir non seulement un débit de fluide important, mais aussi d'avoir un temps de réponse très court (de l'ordre de quelques millisecondes) favorisé par la légèreté du clapet.

Une telle conception évite également les phénomènes d'à-coup et permet d'obtenir un niveau sonore peu élevé.

Un tel type d'électrovanne est particulièrement adapté pour être utilisé sur tout type d'appareillage où l'on souhaite obtenir un débit réglable et/ou variable de fluide (circulation d'air créant une aspiration à l'entrée de l'appareillage), et plus particulièrement sur des appareillages de massage du type décrit dans le brevet européen 224 422.

Dans une telle application, l'utilisation d'une électrovanne conforme à l'invention permet non seulement de réaliser un massage du type "palpé-roulé" classique, le taux d'aspiration pouvant être maintenu constant à un niveau prédéterminé si on le désire pendant toute la phase de massage, mais également, offre la possibilité de réaliser de manière simple, un fonctionnement "séquentiel, pulsé, rythmique", tel qu'en cours de l'opération de massage, le taux d'aspiration varie de manière cyclique, permettant ainsi de combiner à une opération de massage "palpé-roulé" conventionnelle où le phénomène d'aspiration et de prise du pli de peau est maintenu à un niveau constant avec une phase pendant laquelle l'aspiration diminue progressivement pour atteindre une valeur minimale prédéterminée après laquelle elle revient progressivement à une valeur maximale également prédéterminée, provoquant ainsi un effet de "vibration" et de variation de la force d'aspiration et de prise du pli de peau, améliorant ainsi l'efficacité de cette technique et permettant également une mise en oeuvre plus aisée de l'appareillage sur le patient.

En effet, dans une telle application, en fonction de la fréquence et de la durée de mise en action de la source électromagnétique, il est possible d'obtenir une alternance de deux phases de débit, pouvant être modulées à volonté, l'une pendant laquelle l'appareillage assure un taux d'aspiration constant maintenu à un niveau prédéterminé (électroaimant non alimenté), et l'autre, lorsque l'électroaimant est actionné et vient donc obturer le conduit relié à la zone haute pression pendant laquelle le débit (donc le taux d'aspiration) diminue progressivement et pourrait arriver à un seuil nul lorsque le circuit atteindrait la pression extérieure (pression atmosphérique). Lorsque l'on atteint une valeur proche de la valeur haute pression, on provoque soit l'arrêt de l'action de l'électroaimant, de manière à ramener le disque d'obturation dans une position telle que l'air puisse s'écouler normalement dans l'ensemble du circuit sous l'action de la zone basse pression, soit on fixe la force de rappel exercée par l'électroaimant à une valeur telle qu'elle soit supérieure à celle exercée par la zone basse pression, mais inférieure à celle exercée par la zone haute pression, ce qui permet un déplacement et battement du clapet dans la chambre et une fermeture périodique de l'électrovanne.

Il convient de noter que grâce à une telle électrovanne, il est également possible, par simple réglage de la force de rappel exercée par l'électroaimant, d'assurer un déplacement du clapet de telle sorte qu'il vienne simplement à proximité de l'orifice relié à la zone haute pression, sans obturer ce dernier, permettant d'assurer un débit constant réglable.

L'invention et les avantages qu'elle apporte sera cependant mieux comprise grâce à l'exemple de réalisation donné ci-après à titre indicatif mais non limitatif, et qui est illustré par les schémas annexés dans lesquels :
- la figure 1 est une vue en élévation et en coupe, sensiblement à l'échelle 1, d'une électrovanne réalisée conformément à l'invention ;
- la figure 2 est une vue de dessus illustrant la structure particulière du clapet que comporte une électrovanne conforme à l'invention ;
- la figure 3 est une vue de détail de la figure 1 illustrant le circuit magnétique et les déplacements du clapet d'ouverture et fermeture de l'électrovanne ;
- la figure 4 est un diagramme schématique illustrant l'ensemble des moyens permettant la commande et le contrôle d'un appareil de massage faisant appel à un phénomène d'aspiration au moyen d'une électrovanne conforme à l'invention.

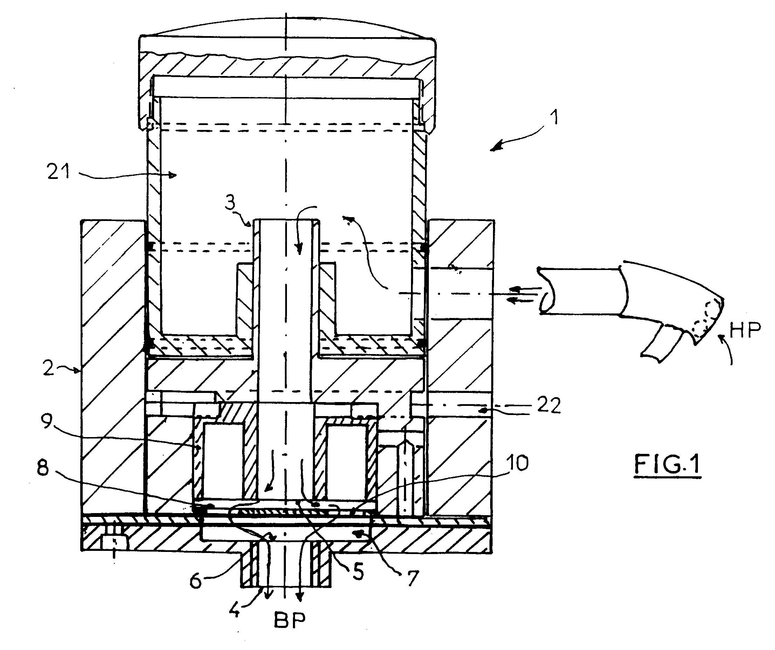

Si l'on se reporte aux figures 1 à 3, l'électrovanne conforme à l'invention et qui est désignée par la référence générale (1), se présente sous la forme d'un ensemble cylindrique interposé entre deux circuits (HP) et (BP).

Le circuit de fluide à l'intérieur de l'électrovanne s'effectue au travers d'un ensemble comportant un conduit (3) dit conduit "d'admission" et un conduit (4) dit conduit de "sortie" relié à la zone basse pression, la sortie (5) du conduit d'admission et l'entrée (6) du conduit de sortie débouchant dans une chambre (7) à l'intérieur de laquelle est disposé un ensemble obturateur (8) qui, sous l'action d'une force électromagnétique créée par un électroaimant (9), et qui, en l'absence de force électromagnétique, est rappelé en direction de l'entrée (6) du conduit de sortie sans l'obturer, afin que dans cette position, on obtienne un écoulement continu du fluide avec un débit maximal maintenu à un niveau prédéterminé fonction de la différence de pression entre la zone haute pression (HP) et la zone basse pression (BP) et de l'éventuelle perte de charge.

Il convient de noter que dans le mode de réalisation illustré aux figures annexées, l'électrovanne conforme à l'invention est réalisée de manière à être facilement démontable et qu'elle comporte un filtre (21) intégré sur le circuit d'admission.

Conformément à l'invention, et ainsi que cela ressort clairement des figures annexées, et pour qu'une telle électrovanne puisse non seulement permettre des débits de fluide importants, pouvant atteindre 25 m3/h ou plus tout en autorisant des temps de réponse très courts (de l'ordre de quelques millisecondes), le circuit d'air à l'intérieur de l'électrovanne, la structure de l'élément obturateur et les caractéristiques du circuit magnétique, ont été définis de manière bien précise, à savoir essentiellement que l'ensemble obturateur (8) est constitué par un clapet, déplaçable linéairement à l'intérieur de la chambre (7), et qui se présente sous la forme d'un disque plat, léger, non déformable, apte à être ramené automatiquement dans sa position permettant l'écoulement du fluide lorsque la pression à l'intérieur du conduit d'admission (3) tend vers une valeur proche d'une pression de consigne prédéterminée, l'écoulement du fluide au travers dudit clapet étant obtenu par l'intermédiaire d'orifices (10) réalisés dans son épaisseur, orifices qui sont disposés dans une zone médiane à l'extérieur de la périphérie du conduit d'admission (3) afin que ce dernier puisse être obturé lorsque le clapet est rappelé sous l'action de la force électromagnétique créée par l'électroaimant (9).

Pour assurer un débit important, la section totale des orifices (10) réalisés dans l'épaisseur du clapet, est sensiblement égale à la section du conduit d'admission (3) et de sortie (4), lesdits conduits étant disposés par ailleurs coaxialement de part et d'autre de la chambre (7) à l'intérieur de laquelle peut se déplacer le clapet.

Par ailleurs, pour obtenir un tel débit important de fluide tout en ayant un temps de réponse très court lorsque l'électroaimant (9) est excité, les déplacements du clapet à l'intérieur de la chambre (7) seront de l'ordre de quelques millimètres par rapport à la sortie (5) du conduit d'admission. La valeur de ces déplacements peut être déterminée en considérant que la surface fictive définie par le prolongement du conduit d'admission (3) et qui se termine contre le clapet lorsque ce dernier n'est pas soumis à l'action de la force électromagnétique, et qui est donc alors traversé par la totalité du flux d'air, doit avoir une aire sensiblement égale à la section des conduits d'admission (3) et de sortie (4). En effet, l'aire de cette surface étant égale au produit de l'excursion du clapet par la circonférence interne de ce dernier, il est possible, connaissant la section du conduit, de déterminer la valeur maximale du déplacement. En effet, en dessous de cette valeur, se produira un étranglement du circuit de fluide et par suite une perte de débit, alors qu'au dessus, il n'y a pas d'amélioration en terme de débit et une perte en rapidité de rappel du clapet, ce qui implique l'utilisation d'une bobine plus puissante pour fermer la vanne.

A titre indicatif, dans l'exemple de réalisation illustré par les figures annexées et pour lequel le diamètre des conduits (3) et (4) est de 14 mm, avec un clapet ayant une épaisseur de 2 mm, l'amplitude du déplacement de ce dernier dans la chambre (7) sera de 2 mm et pesant 20 grammes, ce qui permet d'assurer un débit de fluide pouvant atteindre 25m3/h, tout en permettant un retour pratiquement instantané du clapet sous l'action de l'électroaimant.

A titre indicatif, une telle électrovanne présente comme caractéristique générale d'avoir une puissance de 2,5 watts, un temps de fermeture de l'ordre de 10 millisecondes et autorise lorsqu'elle est ouverte un débit de fluide de l'ordre de 25m3/h.

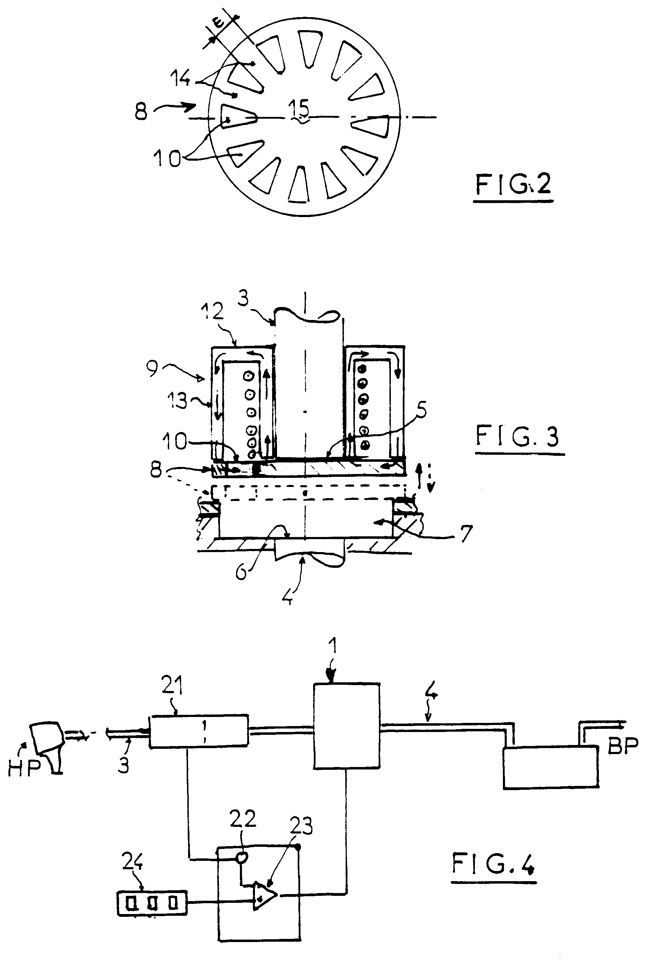

Par ailleurs, pour avoir un bon fonctionnement de la bobine, il convient d'avoir une section constante le long du chemin du champ magnétique qui, comme cela est représenté sur la figure 3, parcourt la colonne centrale puis le fond (12) et enfin la colonne extérieure (13). Pour ce faire, il est nécessaire d'avoir une surface de conduction du champ égale, ce qui est obtenu en ayant des sections égales dans la colonne centrale et la colonne externe (13), la colonne centrale étant donc plus épaisse que la colonne externe (13).

Par ailleurs, le trajet du champ magnétique dans le clapet (8) doit se faire au travers d'une surface identique aux surfaces de l'équipage fixe de l'électroaimant. Par suite, ainsi que cela ressort de la figure 2, les orifices (10) créés dans le clapet (8) et qui permettent l'écoulement du fluide, ont une forme telle qu'ils définissent entre eux des barreaux (14) de largeur (E) constante. Par ailleurs, compte tenu du fait que le champ magnétique ne parcourt le disque que sur la longueur des barreaux (14), il est possible d'envisager d'avoir une zone centrale (15) qui assure la fermeture de l'orifice de sortie (5) d'épaisseur plus faible, permettant ainsi d'alléger le clapet.

Enfin, conformément à l'invention, et pour avoir une ouverture rapide et un entraînement pratiquement instantané dudit clapet par le flux d'air lorsque l'alimentation de ladite bobine est coupée, ledit clapet est de préférence réalisé dans un matériau non aimantable, par exemple en fer doux, qui présente un champ rémanant très faible. En conséquence, dès coupure du champ magnétique, aucune force ne retient le clapet qui est donc entraîné pratiquement instantanément par le flux d'air.

Pour diminuer encore le champ rémanant, il faut limiter le champ magnétique.

Une telle limitation du champ peut être obtenue par l'action d'un entrefer formé, par exemple, par un joint d'étanchéité au niveau de la sortie (5) du conduit d'admission. Un tel joint d'étanchéité peut être constitué par une couche de revêtement du clapet (peinture par exemple). Cet entrefer permet également d'éviter les frottements fer-fer et diminue notablement l'usure.

La figure 4 illustre schématiquement l'application d'une électrovanne réalisée conformément à l'invention sur un appareillage de massage faisant appel à un phénomène d'aspiration pneumatique, et plus particulièrement à un appareillage de massage réalisé conformément aux enseignements des brevets européens 224 422. A titre indicatif, pour de telles installations de massage, il est nécessaire de pouvoir régler le débit en fonction des traitements que l'on réalise, débit qui peut s'élever jusqu'à 25m3/h.

A ce jour, et comme cela ressort plus particulièrement du brevet européen 224 422 (voir figure 6), pour régler le débit, on utilise une pluralité d'électrovannes référencées (34), l'ensemble de ces électrovannes étant remplacé par une seule électrovanne réalisée conformément à l'invention, et qui permet d'obtenir non seulement un fonctionnement en tout ou rien entre un débit maximal lorsque l'électrovanne est ouverte et un arrêt de circulation de fluide lorsqu'elle est fermée, ainsi qu'un débit constant réglable entre les deux extrêmes précités qui était obtenu antérieurement par la pluralité d'électrovannes que comportaient de telles installations, mais également un fonctionnement dynamique entraînant un débit variable, contre ledit flux d'air entre deux valeurs prédéterminées avec possibilité de réglage entre lesdites valeurs.

Dans une telle application, l'électrovanne (1) est donc interposée sur le circuit reliant la tête de massage (HP) à une pompe à vide définissant ainsi un circuit d'admission (3) à haute pression (HP) et un circuit à basse pression (4) (BP). Sur le circuit (5), est monté un filtre (21) destiné à éviter l'aspiration de poussières par la pompe à vide.

L'ensemble est associé à des moyens programmant le degré d'aspiration à l'entrée de la tête de massage et le maintien de l'aspiration à une valeur prédéterminée ainsi que la durée.

De tels moyens sont constitués essentiellement par un ensemble de régulation et de contrôle, comprenant un capteur de pression (22) monté en dérivation sur le circuit (3), le circuit de commande de l'électrovanne (1) comprenant un comparateur (23) (ou amplificateur différentiel), qui reçoit deux informations d'entrée, à savoir :
- le signal de consigne obtenu à partir d'une valeur programmée sur un tableau de commande (24) de la valeur de dépression ;
- le signal réel obtenu à partir de l'information électrique, délivré par le capteur de pression (22) monté sur le circuit pneumatique (3).

Il convient de noter que dans l'électrovanne conforme à l'invention, le filtre (21) est intégré à l'intérieur même du corps de l'électrovanne et le capteur (22) détecte également la pression à l'intérieur du conduit d'admission (3).

Grâce à une électrovanne conforme à l'invention, il est possible de programmer l'opération de massage pour obtenir une aspiration ayant une valeur prédéterminée pendant une durée également prédéterminée, lorsque l'électroaimant (9) rappelant le clapet (8) n'est pas excité et que ledit clapet est donc maintenu espacé de la sortie (5) du conduit d'admission (3). L'air s'écoule alors librement entre les conduits (3) et (4) au travers des orifices du clapet.

Lorsque l'on souhaite faire varier le taux d'aspiration à l'entrée de la tête de massage, l'électroaimant (9) est excité par suite d'un clapet (8) et tend à venir obturer la sortie (5) du conduit (3). Celà entraîne donc une augmentation progressive de la pression à l'intérieur du conduit (3) jusqu'à une valeur tendant à se rapprocher de la valeur haute pression (pression atmosphérique) qui règne à l'extérieur de l'appareillage. Lorsque cette pression atteint un seuil maximal prédéterminé correspondant à un taux d'aspiration minimal de la tête de massage, pression contrôlée par le capteur (22), l'alimentation de l'électroaimant est coupée et le clapet (8) est repoussé automatiquement à l'intérieur de la chambre (7) permettant ainsi l'écoulement de l'air dans l'ensemble du circuit.

En excitant l'électroaimant (9) selon une fréquence déterminée, on obtient un déplacement rythmé, alternatif du clapet (8) entre la sortie du conduit d'admission (3) et sa position extrême à l'intérieur de la chambre (7), provoquant à l'entrée de la tête de massage un phénomène de vibration aspirante.

Il est également possible de maintenir le clapet (8) dans une position déterminée intermédiaire par la seule force magnétique exercée sur le clapet.

En effet, plus le champ magnétique est grand, plus la force magnétique est grande. Dans le même temps, plus l'entrefer est petit, plus le champ magnétique est grand. En d'autres termes, plus le clapet (8) se rapproche de la sortie (5) du conduit d'admission, plus la force magnétique est importante.

Par ailleurs, au niveau du filet d'air qui parcourt la surface entre le clapet (8) et l'ouverture du conduit (5), se produisent des forces de frottement de l'air contre les parois qui ont tendance à repousser le clapet. En conséquence, plus le filet d'air est fin, plus la différence de pression entre la zone haute pression et la zone basse pression est grande, et donc plus les forces de frottement de l'air sont élevées. Ces phénomènes permettent donc de maintenir le clapet dans une position déterminée intermédiaire, car de légères perturbations de l'équilibre, par exemple un rapprochement du clapet (8), se traduisent par une augmentation de la force magnétique attractive qui est compensée par une augmentation de la force du fluide répulsive. Une telle possibilité permet donc d'assurer un débit constant réglable par simple réglage de la force de rappel exercée par l'électroaimant (9).

Enfin, dans une telle application, en fonction de la fréquence et de la durée de mise en action de la source électromagnétique, il est possible d'obtenir une alternance de deux phases de débit, pouvant être modulées à volonté, l'une pendant laquelle l'appareillage assure un taux d'aspiration constant maintenu au niveau prédéterminé, l'autre, lorsque l'électroaimant (9) est actionné et vient donc obturer le conduit (3) relié à la zone haute pression (HP) pendant laquelle le débit (le taux d'aspiration) diminue progressivement et pourrait arriver à un seuil nul lorsque le circuit atteindrait la pression extérieure (pression atmosphérique). Lorsque l'on atteint une valeur proche de la valeur haute pression, on provoque soit l'arrêt de l'électroaimant de manière à ramener le disque d'obturation dans une position telle que l'air puisse s'écouler normalement dans l'ensemble du circuit sous l'action de la zone basse pression, soit on fixe la force de rappel (FM) exercée par l'électroaimant à une valeur telle qu'elle soit supérieure à celle exercée par la zone basse pression, mais inférieure à celui fixé par la zone haute pression, ce qui permet un battement du clapet dans la chambre et une fermeture de l'électrovanne permettant d'obtenir un fonctionnement dynamique.

L'électrovanne selon l'invention, de conception particulièrement simple, qui autorise un grand débit, permet d'obtenir des temps de réponse très courts, peut être utilisée dans tous les cas où l'on souhaite faire varier très rapidement, selon une fréquence qui peut également être variable, le débit d'un fluide entre deux zones soumises à des pressions différentes. Elle peut être utilisée dans tous les cas où l'on souhaite réaliser une régulation commandée de la zone haute pression vers une zone basse pression. Ainsi, une telle électrovanne peut être utilisée pour réaliser un traitement par jets de fluide (eau ou air) au lieu d'une aspiration. Dans un tel cas, la tête de massage par aspiration décrite dans l'exemple d'application donné précédemment, serait remplacée par une pompe de surpression qui délivrerait le fluide (air ou eau) toujours dans le même sens, la vanne régulant de la même manière, ledit fluide étant alors expulsé du côté de la zone basse pression à la sortie de laquelle serait alors disposée une buse ou tête de traitement.

## Revendications

1. Electrovanne à débit variable, sans ressort de rappel, permettant la mise en communication deux circuits maintenus à des pressions différentes afin d'assurer te débit d'un fluide depuis une zone à haute pression (HP) vers une zone à basse pression (BP), comprenant :
- un boitier (2) constituant une chambre (7) à l'intérieur de laquelle débouche un conduit (3) dit "conduit d'admission" relié à la zone haute pression (HP), et un conduit (4) dit "conduit de sortie" relié à la zone basse pression (BP) ;
- un ensemble obturateur (8) constitué par un clapet déplaçable librement à l'intérieur de ladite chambre (7), clapet en forme de disque plat, léger, non déformable, apte à être ramené automatiquement dans sa position permettant l'écoulement du fluide lorsque la pression à l'intérieur du conduit (HP) d'admission (5) tend vers une valeur proche d'une pression de consigne prédéterminée, et qui :
. sous l'action d'une force électromagnétique, tend à venir obturer l'orifice (5) du conduit d'admission (3),
. en l'absence de force électromagnétique, est rappelé en direction du conduit de sortie (4) (BP), et n'obture pas l'entrée de ce dernier afin que dans cette position, on obtienne un écoulement continu du fluide avec un débit maximal maintenu à un niveau prédéterminé fonction de la différence de pression entre la zone haute pression (HP) et la zone basse pression (BP) et de l'éventuelle perte de charge,
***caractérisée*** en ce que :
- l'écoulement du fluide au travers du clapet (8) est obtenu par l'intermédiaire d'orifices (10) réalisés dans l'épaisseur de ce dernier, orifices disposés dans une zone médiane à l'extérieur de la périphérie du conduit d'admission (3) afin que ce dernier puisse être obturé lorsque le clapet (8) est rappelé sous l'action de la force électromagnétique ;
- elle comporte des moyens de réglage de la force électromagnétique de rappel exercée par l'électroaimant permettant d'une part, de positionner ledit clapet (8) à un niveau prédéterminé entre l'ouverture et la fermeture pour obtenir un débit constant prédéterminé et, d'autre part, de le déplacer alternativement, selon une fréquence prédéterminée, permettant ainsi d'obtenir un débit alternatif de même fréquence et d'amplitude réglable, entraînant un fonctionnement séquentiel, pulsé, rythmique.

2. Electrovanne selon la revendication 1, caractérisée en ce que la section totale des orifices (10) réalisés dans l'épaisseur du clapet est sensiblement égale à la section des conduits d'admission (3) et de sortie (4), lesdits conduits étant disposés coaxialement de part et d'autre de la chambre à l'intérieur de laquelle peut se déplacer le clapet.

3. Electrovanne selon la revendication 2, caractérisée en ce que la surface fictive, définie par le prolongement du conduit haute pression (HP) se terminant contre le clapet lorsque ce dernier n'est pas soumis à l'action de la force électromagnétique, qui est traversée par la totalité du flux d'air, a une aire sensiblement égale à la section des conduits (4) ou (5).

4. Electrovanne selon l'une des revendications 1 à 3, caractérisée en ce que le clapet (8) est à base d'un matériau non aimantable (fer doux par exemple).

5. Electrovanne selon la revendication 4, caractérisée en ce que la surface active du clapet (8) est recouverte d'un revêtement de matière présentant une perméabilité magnétique faible, créant un entrefer lorsque le clapet est en position fermée.

6. Electrovanne selon l'une des revendications 1 à 5, caractérisée en ce qu'elle comporte un filtre (21) intégré qui est traversé par le fluide avant son entrée dans le conduit d'admission (3).

7. Appareillage de massage dont la tête est reliée par un circuit à une pompe à vide permettant ainsi d'exercer un phénomène d'aspiration sur le patient, caractérisé en ce qu'une électrovanne (1) réalisée conformément aux revendications 1 à 6, est interposée sur ledit circuit.

## Claims

1. A variable flow solenoid valve, without return spring, allowing connection of two circuits maintained at different pressures, in order to ensure flow of a fluid from a high pressure zone (HP) to a low pressure zone (BP), comprising:
- a casing (2) constituting a chamber (7) into which opens a conduit (3) called the "inlet conduit" connected to the high pressure zone (HP), and a conduit (4) called the "outlet conduit" connected to the low pressure zone (BP);
- a closure assembly (8) consisting of a flap valve that can be moved freely inside said chamber (7), which flap valve is in the form of a nondeformable lightweight flat disk that can be returned automatically into its position permitting the fluid to flow when the pressure inside the (HP) inlet conduit (5) tends toward a value close to a predetermined set pressure, and which:
. under the action of an electromagnetic force, tends to close the orifice (5) of the inlet conduit (3),
. in the absence of an electromagnetic force, is returned toward the outlet conduit (4) (BP) and does not close the entry of the latter so as to obtain, in this position, a continuous flow of the fluid with a maximum flow rate maintained at a predetermined level that is a function of the pressure difference between the high pressure zone (HP) and the low pressure zone (BP) and the possible pressure drop,
caracterized in that :
the flow of the fluid through the flap valve (8) is obtained by means of orifices (10) made in the thickness of the latter, which orifices are arranged in a central zone outside the periphery of the inlet conduit (3), so that the latter can be closed when the flap valve (8) is returned under the action of the electromagnetic force;
- means are included for adjusting the electromagnetic return force exerted by the electromagnet, allowing said valve (8), on the one hand, to be positioned at a predetermined level between opening and closure in order to obtain a constant predetermined flow rate and, on the other hand, to be moved in alternation, at a predetermined frequency, thus allowing an alternating flow rate of the same frequency and of adjustable amplitude to be obtained, leading to sequential, pulsed and rhythmic operation.

2. The solenoid valve as claimed in claim 1, wherein the total cross section of the orifices (10) made in the thickness of the flap valve is substantially equal to the cross section of the inlet (3) and outlet (4) conduits, said conduits being arranged coaxially on either side of the chamber inside which the flap valve can move.

3. The solenoid valve as claimed in claim 2, wherein the imaginary surface defined by the extension of the high pressure conduct (HP) ending against the flap valve when the latter is not subjected to the action of the electromagnetic force, through which all the air flow passes, has an area substantially equal to the cross section of the conduits (4) or (5).

4. The solenoid valve as claimed in one of claims 1 to 3, wherein the flap valve (8) is based on a non-magnetizable material (soft iron, for example).

5. The solenoid valve as claimed in claim 4, wherein the active surface of the flap valve (8) is covered with a coating of material having low magnetic permeability, creating a gap when the flap valve is in the closed position.

6. The solenoid valve as claimed in one of claims 1 to 5, which includes an integrated filter (21) through which the fluid passes before it enters the inlet conduit (3).

7. A massage apparatus whose head is connected by a circuit to a vacuum pump, thus making it possible to exert a suction phenomenon on the patient, wherein a solenoid valve (1) produced in accordance with claims 1 to 6 is interposed on said circuit.

## Patentansprüche

1. Proportional-Magnetventil ohne Rückholfeder zum Verbinden zweier auf unterschiedlichem Druck befindlicher Kreise, wobei ein Durchsatz eines Fluids von einem Bereich höheren Drucks (HP) zu einem Bereich niedrigeren Drucks (BP) ermöglicht werden soll, mit:
- einem eine Kammer (7) darstellenden Gehäuse (2), in deren Innenraum eine mit dem Bereich höheren Drucks (HP) verbundene Eingangsleitung (3) sowie eine mit dem Bereich niedrigeren Drucks (BP) verbundene Ausgangsleitung (4) münden;
- einer Ventilkörperanordnung (8), die von einer in der Kammer (7) frei beweglichen Ventilklappe gebildet wird, wobei die Ventilklappe kreisscheibenförmig, flach, leicht, nicht-verformbar und selbsttätig in ihrer Position mitnehmbar ausgebildet ist, derart, daß das Fluid strömen kann, wenn der Druck im Inneren der (HP) Eingangsleitung (5) sich einem Wert annähert, der nahe einem vorbestimmten Referenz-Druckwert liegt, und die
-- unter der Einwirkung einer elektromagnetischen Kraft die Öffnung (5) der Eingangsleitung (3) verschließt, sowie
-- in Abwesenheit der elektromagnetischen Kraft in Richtung auf die Ausgangsleitung (4) mitgenommen wird und deren Öffnung nicht verschließt, derart, daß in dieser Position ein kontinuierlicher Strom des Fluids mit maximalem Durchsatz auf einem vorbestimmten Niveau gehalten wird, und zwar in Abhängigkeit von der Druckdifferenz zwischen dem Bereich hohen Drucks (HP) und dem Bereich niedrigen Drucks (BP) unter Berücksichtigung eventueller Druckverluste,
dadurch gekennzeichnet, daß
- der Strom des Fluids durch die Ventilklappe (8) hindurch mittels Öffnungen (10) erzielt wird, die durch deren Dicke hindurchgehen, wobei die Öffnungen (10) in einem mittleren Bereich außerhalb der Peripherie der Eingangsleitung (3) angeordnet sind, derart, daß letztere verschlossen werden kann, wenn die Ventilklappe (8) unter der Einwirkung der elektromagnetischen Kraft zurückgeholt wird;
- und daß Mittel zum Regeln der vom Elektromagneten ausgeübten elektromagnetischen Rückholkraft vorgesehen sind, derart, daß einerseits die Ventilklappe (8) in einer vorbestimmten Lage zwischen einer Offenstellung und einer Schließstellung gehalten werden kann, damit ein vorbestimmter, konstanter Durchsatz eingestellt wird, und daß andererseits die Ventilklappe (8) mit vorbestimmter Frequenz alternierend bewegt werden kann, damit ein alternierender Durchsatz derselben Frequenz und mit einstellbarer Amplitude eingestellt wird, um eine nachfolgende, pulsierende, rhythmische Funktion anzutreiben.

2. Magnetventil nach Anspruch 1, dadurch gekennzeichnet, daß der Gesamtquerschnitt der in der Dicke der Ventilklappe (8) angebrachten Öffnungen (10) im wesentlichen gleich dem Querschnitt der Eingangsleitung (3) und der Ausgangsleitung (4) ist, und daß die Leitungen (3, 4) koaxial zueinander auf gegenüberliegenden Seiten der Kammer (7) angeordnet sind, in der sich die Ventilklappe (8) bewegt.

3. Magnetventil nach Anspruch 2, dadurch gekennzeichnet, daß die fiktive Oberfläche, definiert durch die Verlängerung der Hochdruckleitung (HP), die auf der Ventilklappe endet, wenn diese nicht der Einwirkung der elektromagnetischen Kraft ausgesetzt ist, und die von der Gesamtheit des Luftstroms durchströmt wird, eine im wesentlichen gleiche Querschnittsfläche wie der Querschnitt der Leitungen (4, 5) aufweist.

4. Magnetventil nach einem der Ansprüche 1 bis 3, dadurch gekennzeichnet, daß die Ventilklappe (8) aus einem nichtmagnetisierbaren Werkstoff besteht (z.B. Weicheisen).

5. Magnetventil nach Anspruch 4, dadurch gekennzeichnet, daß die aktive Oberfläche der Ventilklappe (8) mit einer Beschichtung aus einem Werkstoff versehen ist, der eine niedrige magnetische Permeabilität aufweist, so daß ein Luftspalt gebildet wird, wenn die Ventilklappe (8) in der Schließstellung ist.

6. Magnetventil nach einem der Ansprüche 1 bis 5, dadurch gekennzeichnet, daß es einen integrierten Filter (21) umfaßt, der von dem Fluid vor dessen Eintritt in die Eingangsleitung (3) durchströmt wird.

7. Massageapparat, dessen Kopf an einen Kreis mit einer Unterdruckpumpe angeschlossen ist, so daß eine Saugwirkung auf einen Patienten ausgeübt werden kann, dadurch gekennzeichnet, daß ein nach den Ansprüchen 1 bis 6 ausgebildetes Magnetventil in den Kreis geschaltet ist.
